# EUROPÄISCHE PATENTSCHRIFT

(11) **EP 1 313 591 B1**
(45) Veröffentlichungstag und Bekanntmachung des Hinweises auf die Patenterteilung: **04.05.2005**
(21) Anmeldenummer: 01971982.2
(22) Anmeldetag: 30.08.2001
(51) Int. Cl.: B23P 9/00, F16C 15/00

(54) **VERFAHREN ZUR PLASTISCHEN VERFORMUNG EINER NABENBOHRUNG EINES SCHNELLLAUFENDEN TURBOMASCHINENTEILS**
METHOD FOR THE PLASTIC MOULDING OF THE HUB RECESS FOR A FAST RUNNING TURBINE COMPONENT
PROCEDE POUR FAIRE SUBIR UNE DEFORMATION PLASTIQUE A UN ALESAGE DE MOYEU D'UNE PIECE A VITESSE DE ROTATION ELEVEE D'UNE TURBOMACHINE

(30) Priorität: 31.08.2000 DE 10042700
(43) Veröffentlichungstag der Anmeldung: 28.05.2003
(73) Patentinhaber: MTU Friedrichshafen GmbH, 88040 Friedrichshafen (DE)
(72) Erfinder: RUETZ, Georg, 88090 Immenstaad (DE)
(74) Vertreter: Winter, Josef
(86) Internationale Anmeldenummer: PCT/EP2001/009987
(87) Internationale Veröffentlichungsnummer: WO 2002/018092

(56) Entgegenhaltungen:
- EP-A- 0 086 505
- PATENT ABSTRACTS OF JAPAN vol. 017, no. 159 (M-1389), 29. März 1993 (1993-03-29) -& JP 04 325701 A (TOSHIBA CORP), 16. November 1992 (1992-11-16)

## Beschreibung

Die Erfindung betrifft ein Verfahren zur plastischen Verformung einer Nabenbohrung eines schnelllaufenden Turbomaschinenteils nach dem Oberbeqriff des Anspruchs 1.
Ein solches Verfahren ist aus JP-A-4-325701 bekannt.

Aus der EP 0 086 505 A1 ist ein Verfahren bekannt, welches dazu dient, eine bei einer Schleuderprüfung von Turbomaschinenteilen verursachte Aufweitung der Nabenbohrung des Teils aufgrund eines plastischen Fließens des Materials des Turbomaschinenteils im Bereich der Nabe zu verhindern, indem die Nabenbohrung vor der Schleuderprüfung plastisch verformt wird. Diese plastische Verformung erfolgt hierbei auf mechanischem Wege mittels eines Ziehdoms, eines Druckdorns oder einer Walzrolle und führt zu einer Aufweitung der Nabenbohrung, aus der ein Spannungszustand des Materials im Bereich der Nabenbohrung resultiert, welcher die Belastung beim Schleuderversuch quasi vorwegnimmt.

Aus der DE 43 37 517 A1 ist ein Verfahren zum Innenhochdruck-Umformen von hohlen abgesetzten Wellen aus kaltumformbarem Material bekannt, bei welchem ein rohrförmiges Ausgangsmaterial in einem Werkzeug mit einer der gewünschten endgültigen äußeren Gestalt der Welle entsprechenden Innenkontur mittels eines Fluids, das ein Gas oder eine Flüssigkeit sein kann, aufgeweitet, das aufgeweitete Werkstück sodann durch Aufbringen eines noch höheren Kalibrierdrucks auf die Innenkontur des Werkzeugs kalibriert und schließlich unter Aufrechterhaltung des Kalibrierdrucks in Längsrichtung auf seine endgültige Form angestaucht wird. Bei diesem bekannten Verfahren erfolgt somit eine plastische Verformung eines relativ dünnwandigen Materials auf eine endgültige Außenkontur, welche von der Ursprungskontur des rohrförmigen Ausgangsmaterials wesentlich verschieden ist, um beispielsweise Antriebswellen eines Kraftfahrzeugs herzustellen, welche in einem mittleren Rohrbereich einen größeren Außendurchmesser mit dünner Wandstärke und an beiderseitig ausgebildeten Endbereichen einen geringeren Außendurchmesser und eine dickere Wandstärke aufweisen. Insbesondere sollen Wanddickenunterschiede bei derartigen Wellen herbeigeführt werden, die frühere bei einem solchen Innenhochdruckumformen bekannte Verfahrensgrenzen um ein Vielfaches übersteigen.

Weiterhin ist aus der EP 0 509 238 A 1 eine Hohlwelle bekannt, auf welcher durch hydraulisches Aufweiten Teile befestigt sind. Diese Teile haben eine zentrale Bohrung, deren Durchmesser im Ausgangszustand geringfügig größer als der Außendurchmesser der Hohlwelle ist, so dass die Teile in die gewünschte Position auf der Hohlwelle gebracht werden können, bevor der hydraulische Aufweitvorgang stattfindet. Durch das hydraulische Aufweiten der Hohlwelle werden Rückformkräfte erzeugt, die eine kraftschlüssige Verbindung zwischen den aufgesetzten Teilen und der Hohlwelle ergeben.

Schließlich ist aus der DE 213 421 ein Verfahren zum Abbringen von auf Achsen oder Wellen sitzenden Maschinenteilen, etwa zum Abziehen von Riemen- oder Seilscheiben, Schwungrädern, Turbinenrädern oder dergleichen von ihren Achsen, bekannt, bei dem in eine an der Innenfläche der auf der Welle sitzenden Nabe eine geeignete Flüssigkeit unter sehr hohem Druck eingepresst wird. Die über eine in der Nabe vorgesehene Bohrung zugeführte Pressflüssigkeit sucht die Nabe auszudehnen und von der Welle abzudrücken, wobei gleichzeitig die unter hohem Druck stehende Flüssigkeit in die Passflächen zwischen Nabe und Welle eindringt und dadurch das Abbringen des zu lösenden Maschinenteils erleichtern soll.

Die Aufgabe der Erfindung ist es die Grenzdrehzahl eines schneillaufenden Turbomaschinenteils zu erhöhen.

Diese Aufgabe wird durch das im Anspruch 1 angegebene Verfahren gelöst.

Vorteilhafte Weiterbildungen der Erfindung sind in den Unteransprüchen gekennzeichnet.

Durch die Erfindung wird ein Verfahren zur Erhöhung der Grenzdrehzahl eines schnelltaufenden Turbomaschinenteils geschaffen, bei dem die Nabenbohrung des Turbomaschinenteils einer plastischen Verformung unterzogen wird, wobei die plastische Verformung der Nabenbohrung durch hydraulische Aufweitung mittels eines unter hohem Druck in die Nabenbohrung des Turbomaschinenteils eingebrachten Hydraulikfluids erfolgt.
Erfindungsgemäß erfolgt die hydraulische Aufweitung der Nabenbohrung im Falle von einem aus einem mit einer Nabenbohrung versehenen Vollmaterial herzustellenden Turbomaschinenteil mit Schaufelkanälen vor dem Fräsen der Schaufelkanäle.

Vorzugsweise ist es vorgesehen, dass die hydraulische Aufweitung der Nabenbohrung mittels einer in diese eingesetzten Hydraulikvorrichtung erfolgt, welche eine durch Dichtungsmittel nach außen abgedichtete, zwischen der Nabenbohrung und der Hydraulikvorrichtung vorgesehene Aussparung durch das Hydraulikfluid druckbeaufschlagbar macht.

Gemäß einer Ausführungsform kann es vorgesehen sein, dass die Dichtungsmittel in Radialrichtung zwischen der Hydraulikvorrichiung und der Nabenbohrung wirksam sind.

Gemäß einer anderen Ausführungsform kann es vorgesehen sein, dass die Dichtungsmittel in Axialrichtung zwischen der Hydraulikvorrichtung und der Nabenbohrung wirksam sind.

Von besonderem Vorteil ist eine Ausgestaltung des erfindungsgemäßen Verfahrens dahingehend, dass die hydraulische Aufweitung der Nabenbohrung während eines Auswuchtschrittes bei der Herstellung des Turbomaschinenteils erfolgt, während dessen das Turbomaschinenteil auf einem als Hydraulikvorrichtung ausgebildeten Wuchtdorn montiert ist.

Besonders geeignet ist das erfindungsgemäße Verfahren, wenn das Turbomaschinenteil ein Verdichterrad einer Turbomaschine ist.

Die hydraulische Aufweitung der Nabenbohrung kann im Falle eines aus einem geschmiedeten Rohteil hergestellten Turbomaschinenteils vor oder nach dem Fräsen der Schaufelkanäle erfolgen.

Im folgenden wird ein Ausführungsbeispiel der Erfindung anhand der Zeichnung erläutert.
Figur 1 zeigt in einer etwas schematisierten Seitenansicht den Schnitt durch ein Turbomaschinenteil im Bereich von dessen Nabe, bei dem das erfindungsgemäße Verfahren gemäß einem Ausführungsbeispiel der Erfindung zur Anwendung gebracht wird;
Figur 2 zeigt in einer etwas schematisierten Seitenansicht den Schnitt durch ein Turbomaschinenteil im Bereich von dessen Nabe, bei dem das erfindungsgemäße Verfahren gemäß einem zweiten Ausführungsbeispielen der Erfindung zur Anwendung gebracht wird.

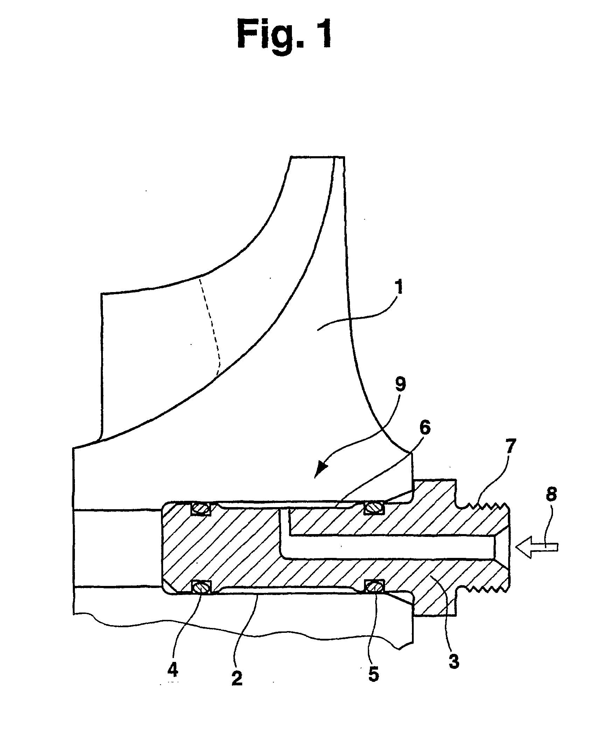

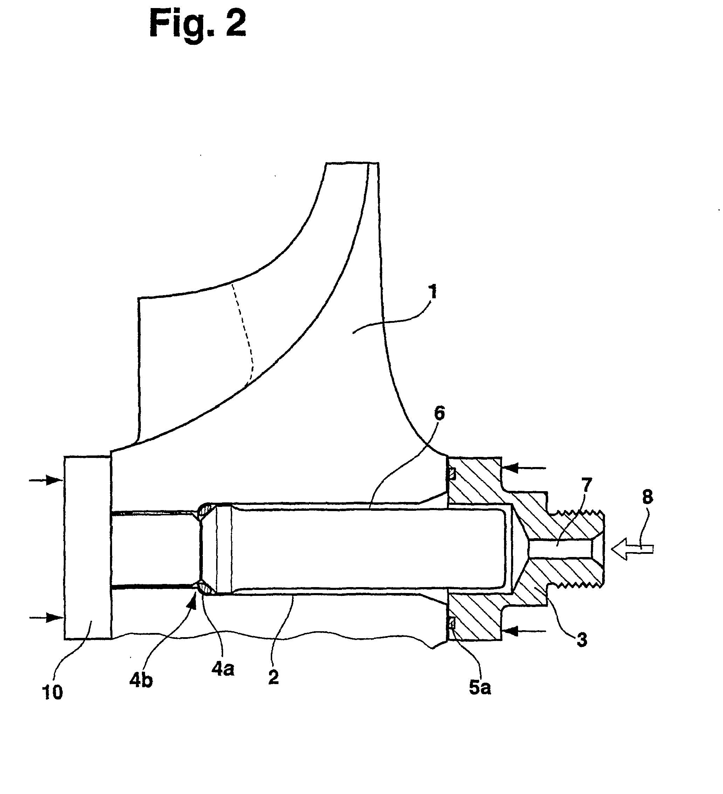

In den Figuren 1 und 2 bedeutet das Bezugszeichen 1 ein Turbomaschinenteil, beispielsweise ein Verdichterrad einer Turbine, dessen Nabenbohrung 2 einer plastischen Verformung unterzogen werden soll, um an der Nabe Vorspannungen zu erzeugen, welche die Grenzdrehzahl des Turbomaschinenteils erhöhen sollen. Allgemein erfolgt diese plastische Verformung der Nabenbohrung 2 durch eine hydraulische Aufweitung derselben mittels eines Hydraulikfluids 8, das unter hohem Druck in die Nabenbohrung 2 des Turbomaschinenteils eingebracht wird. Hierzu wird in die Nabenbohrung 2 eine Hydraulikvorrichtung 3 in Form eines Dorns eingesetzt, welcher eine zwischen der Nabenbohrung 2 und der Hydraulikvorrichtung 3 befindliche Aussparung 6 bildet, die durch Dichtungen beiderseits der genannten Aussparung 6 abgedichtet sind.

Bei dem in Figur 1 gezeigten Ausführungsbeispiel sind an der Hydraulikvorrichtung 3 Dichtungen 4 und 5 vorgesehen, welche radial von innen gegen die Nabenbohrung 2 drücken. Dadurch treten im wesentlichen keine Kräfte in Axialrichtung der Nabenbohrung 2 auf.

Bei dem in Figur 2 gezeigten Ausführungsbeispiel sind an der Hydraulikvorrichtung 3 Dichtungen 4a und 5a vorgesehen, welche eine Abdichtung in axialer Richtung bewirken, nämlich die Dichtung 4a in axialer Richtung gegen eine Schulter 4b am distalen Ende der Nabenbohrung 2, die Dichtung 5a an der Außenfläche des Körpers des Turbomaschinenteils 1. Die dadurch auftretenden Kräfte in Axialrichtung der Nabenbohrung 2 werden von einem Widerlager 10 aufgenommen, welches am distalen Ende der Hydraulikvorrichtung 3 vorgesehen ist. Dadurch werden die zu einer sicheren Abdichtung erforderlichen Kräfte in Axialrichtung an der Dichtung 5a erzeugt.

Sowohl bei Figur 1 als auch bei Figur 2 wird das Hydraulikfluid 8 über einen zentral in der Hydraulikvorrichtung 3 ausgebildeten Zuführungskanal 7 in die Aussparung 6 eingebracht und unter sehr hohen Druck gesetzt, so dass die Nabenbohrung 2 zunächst gedehnt und dann einer plastischen Verformung unterzogen wird. Hierdurch wird ein Druckspannungsfeld 9 erzeugt, wie es in der Figur 1 schematisch angedeutet ist. Diese Druckspannungsfeld nimmt die bei hohen Drehzahlen des Turbomaschinenteils 1 auftretenden Spannungen quasi vorweg, so dass die Grenzdrehzahl des Turbomaschinenteils erhöht wird.

Gemäß einem Aspekt der Erfindung erfolgt die hydraulisch Aufweitung der Nabenbohrung 2 während eines Auswuchtschrittes bei der Herstellung des Turbomaschinenteils 1, während dessen das Turbomaschinenteil 1 auf einem Wuchtdorn montiert ist, der zugleich die Hydraulikvorrichtung 3 bildet.

Das Turbomaschinenteil 1 kann insbesondere ein Verdichterrad einer Turbomaschine sein. Im Falle der vorstehend dargestellten Ausführungsbeispiele erfolgt die Aufweitung der Nabenbohrung an einem fertigen, das heißt, mit Schaufelkanälen ausgeführten Turbomaschinenteil. Das Turbomaschinenteil kann dabei ein Gussteil oder geschmiedet sein.

Bei einem aus einem geschmiedeten Rohteil hergestellten Turbomaschinenteil werden die Schaufelkanäle gefräst. Die hydraulische Aufweitung der Nabenbohrung kann in diesem Fall vor dem Fräsen der Schaufelkanäle erfolgen oder aber auch danach. Erfolgt die hydraulische Aufweitung nach dem Fräsen, wie in den Figuren dargestellt, so hat das den Vorteil, dass keine Verzüge des Fertigteils zu erwarten sind und somit lediglich eine geringe Nachbearbeitung im Nabenbereich notwendig ist. Es sind jedoch geringere Druckeigenspannungen erreichbar als bei der Autofrettage vor dem Fräsen der Schaufelkanäle. Das liegt einfach daran, dass beim Rohteil, das aus einem geschmiedeten Rundmaterial mit Nabenbohrung besteht, höhere Autofrettage-Drücke möglich sind und damit auch höhere Druckeigenspannungen. Allerdings sind aufgrund von Eigenspannungsumlagerungen Verzüge möglich, die sich jedoch in engen Grenzen halten.

### Bezugszeichenliste

- 1: Turbomaschinenteil
- 2: Nabenbohrung
- 3: Hydraulikdorn
- 4;4a: Dichtung
- 4b: Schulter
- 5;5a: Dichtung
- 6: Aussparung
- 7: Zuführungskanal
- 8: Hydraulikfluid
- 9: Druckspannungsfeld
- 10: Widerlager

## Patentansprüche

1. Verfahren zur plastischen Verformung einer Nabenbohrung eines schnelllaufenden Turbomaschinenteils, wobei die plastische Verformung der Nabenbohrung (2) durch hydraulische Aufweitung mittels eines unter hohem Druck in die Nabenbohrung (2) des Turbomaschinenteils (1) eingebrachten Hydraulikfluids (8) erfolgt, **dadurch gekennzeichnet, dass** die hydraulische Aufweitung der Nabenbohrung (2) im Falle von einem aus einem mit einer Nabenbohrung (2) versehenen Vollmaterial herzustellenden Turbomaschinenteil (1) mit Schaufelkanälen vor dem Fräsen der Schaufelkanäle erfolgt.

2. Verfahren nach Anspruch 1, **dadurch gekennzeichnet, dass** die hydraulische Aufweitung der Nabenbohrung (2) mittels einer in diese eingesetzten Hydraulikvorrichtung (3) erfolgt, welche eine durch Dichtungsmittel (4; 4a, 5; 5a) nach außen abgedichtete, zwischen der Nabenbohrung (2) und der Hydraulikvorrichtung (3) vorgesehene Aussparung (6) durch das Hydraulikfluid (8) druckbeaufschlagbar macht.

3. Verfahren nach Anspruch 2, **dadurch gekennzeichnet, dass** die Dichtungsmittel (4, 5) in Radialrichtung zwischen der Hydraulikvorrichtung (3) und der Nabenbohrung (2) wirksam sind.

4. Verfahren nach Anspruch 2, **dadurch gekennzeichnet, dass** die Dichtungsmittel (4a, 5a) in Axialrichtung zwischen der Hydraulikvorrichtung (3) und der Nabenbohrung (2) wirksam sind.

5. Verfahren nach einem der Ansprüche 1 bis 4, **dadurch gekennzeichnet, dass** das Turbomaschinenteil (1) ein Verdichterrad einer Turbomaschine ist.

## Claims

1. Method of plastically deforming a hub bore of a high-speed turbomachine part, the hub bore (2) being plastically deformed by hydraulic widening by means of a hydraulic fluid (8) introduced under high pressure into the hub bore (2) of the turbomachine part (1), **characterized in that** the hydraulic widening of the hub bore (2) in the case of a turbomachine part (1) having blade passages which is to be produced from a solid material provided with a hub bore (2) is effected before the milling of the blade passages.

2. Method according to Claim 1, **characterized in that** the hydraulic widening of the hub bore (2) is effected by means of a hydraulic device (3) which is inserted into said hub bore (2) and which enables pressure to be applied by the hydraulic fluid (8) to a recess (6) sealed off from the outside by sealing means (4; 4a, 5; 5a) and provided between the hub bore (2) and the hydraulic device (3).

3. Method according to Claim 2, **characterized in that** the sealing means (4, 5) are effective in the radial direction between the hydraulic device (3) and the hub bore (2).

4. Method according to Claim 2, **characterized in that** the sealing means (4a, 5a) are effective in the axial direction between the hydraulic device (3) and the hub bore (2).

5. Method according to one of Claims 1 to 4, **characterized in that** the turbomachine part (1) is a compressor wheel of a turbomachine.

## Revendications

1. Procédé de déformation plastique d'un alésage de moyeu d'une pièce de turbomachine tournant à grande vitesse, la déformation plastique de l'alésage de moyeu (2) s'effectuant par élargissement hydraulique au moyen d'un fluide hydraulique (8) introduit sous une forte pression dans l'alésage de moyeu (2) de la pièce de turbomachine (1), **caractérisé en ce que** l'élargissement hydraulique de l'alésage de moyeu (2) s'effectue dans le cas d'une pièce de turbomachine (1) à fabriquer à partir d'un matériau plein pourvu d'un alésage de moyeu (2) et présentant des canaux d'aube, avant le fraisage des canaux d'aube.

2. Procédé selon la revendication 1, **caractérisé en ce que** l'élargissement hydraulique de l'alésage de moyeu (2) s'effectue au moyen d'un dispositif hydraulique (3) inséré dans celui-ci, qui permet la mise sous pression par un fluide hydraulique (8) d'un évidemment (6) prévu entre l'alésage de moyeu (2) et le dispositif hydraulique (3) et rendu étanche vers l'extérieur par des moyens d'étanchéité (4; 4a, 5; 5a).

3. Procédé selon la revendication 2, **caractérisé en ce que** les moyens d'étanchéité (4, 5) sont actifs dans le sens radial entre le dispositif hydraulique (3) et l'alésage de moyeu (2).

4. Procédé selon la revendication 2, **caractérisé en ce que** les moyens d'étanchéité (4a, 5a) sont actifs dans le sens axial entre le dispositif hydraulique (3) et l'alésage de moyeu (2).

5. Procédé selon l'une quelconque des revendications 1 à 4, **caractérisé en ce que** la pièce de turbomachine (1) est une roue de compresseur d'une turbomachine.
